# EUROPÄISCHE PATENTANMELDUNG

(11) **EP 3 982 343 A1**
(43) Veröffentlichungstag der Anmeldung: **13.04.2022**
(21) Anmeldenummer: 21201631.5
(22) Anmeldetag: 08.10.2021
(51) Int. Cl.: G08C 17/02, G01S 5/02, G01S 13/00, H04W 4/44

(54) **KOMFORTSYSTEM FÜR EIN FAHRZEUG**

(30) Priorität: 09.10.2020 DE 102020126543
(71) Anmelder: Huf Hülsbeck & Fürst GmbH & Co. KG, 42551 Velbert (DE)
(72) Erfinder: Schindler, Mirko, 42549 Velbert (DE); Peschl, Andreas, 42555 Velbert (DE); Gornik, Andreas, 58285 Gevelsberg (DE)
(74) Vertreter: Bals & Vogel Patentanwälte PartGmbB

(57) **Zusammenfassung**

Die Erfindung betrifft ein Komfortsystem (10) für ein Fahrzeug (100) mit zumindest einer UWB-Moduleinheit (11) zum Bereitstellen von zumindest einer Fahrzeugfunktion (F) bei einem Fahrzeug (100), aufweisend: eine UWB-Antenne (11.1) zum Durchführen einer Kommunikation (K) und/oder Detektion (D), wobei in Abhängigkeit von der Kommunikation (K) und/oder Detektion (D) die Fahrzeugfunktion (F) aktivierbar ist, ein, insbesondere elektronischer, UWB-Sendeempfänger (11.2) zum Aussenden und/oder Empfangen von elektrischen Signalen von der UWB-Antenne (11.1), die für die Kommunikation (K) und/oder Detektion (D) spezifisch sind, eine, insbesondere elektronische, Verarbeitungsvorrichtung (11.3) zur Ansteuerung des UWB-Sendeempfängers (11.2), um eine Kommunikation (K) und/oder Detektion (D) durch die UWB-Antenne (11.1) durchzuführen, und eine, insbesondere elektronische, Schnittstelle (11.4) zum Übermitteln eines Ergebnisses der Detektion (D) und/oder Kommunikation (K) an ein, insbesondere fahrzeugseitiges Steuergerät (12), um die Fahrzeugfunktion (F) in Abhängigkeit von der Detektion (D) und/oder Kommunikation (K) auszulösen.

Ferner ist die Erfindung auch auf ein Fahrzeug sowie ein entsprechendes Verfahren gerichtet.

## Beschreibung

Die vorliegende Erfindung betrifft ein Komfortsystem für Fahrzeuge zum Auslösen einer Fahrzeugfunktion gemäß dem Hauptanspruch. Ferner bezieht sich die Erfindung auf ein Fahrzeug nach dem weiteren unabhängigen Vorrichtungsanspruch sowie ein Verfahren zum Auslösen einer Fahrzeugfunktion eines Fahrzeuges nach dem unabhängigen Verfahrensanspruch.

Es ist aus dem Stand der Technik bekannt, dass Fahrzeuge über sogenannte Passiv-Keyless-Entry-System verfügen. Hierbei erhält der Benutzer des Fahrzeuges einen Zugang zum Fahrzeug ohne aktiv einen Entriegelungs- oder Öffnungsvorgang durchzuführen. Zu diesem Zweck trägt der Benutzer in der Regel einen mobilen ID-Geber mit sich, der automatisch vom Fahrzeug angesteuert wird bzw. geweckt wird und dann einen Identifizierungsvorgang mit einem Sicherheitssystem einleitet und durchführt. Sofern die Auswertung des Identifizierungsvorgangs positiv verlaufen ist, wird vom Sicherheitssystem automatisch eine Fahrzeugfunktion, nämlich eine Entriegelung der Türen, Klappen oder dergleichen ausgeführt.

Damit der Benutzer mit seinem Fahrzeug komfortabel in eine Garage fahren kann, sind ebenfalls mobile Garagensteuerungen bekannt, die ein Entriegeln und/oder Öffnen eines Garagentors per Funk ermöglichen. Hierbei muss der Benutzer nicht aus dem Fahrzeug aussteigen, um ein Tor der Garage zu öffnen. Üblicherweise muss jedoch der Benutzer seine mobile Garagensteuerung aktiv betätigen, um den dortigen Identifizierungsvorgang und/oder Öffnungsvorgang einzuleiten. Nachteilig bei dieser bekannten Lösung ist, dass der Benutzer entweder mit seinem Fahrzeug anhalten muss, um die Garagensteuerung aktiv zu betätigen oder er aktiviert die Garagensteuerungen während der Fahrt, wobei er den richtigen Abstand zum Tor benötigt. Ist der Abstand zu groß, reicht die Funkverbindung von der Garagensteuerung nicht bis zum Tor und es lässt sich nicht öffnen. Ist der Abstand zu klein, muss der Benutzer sein Fahrzeug anhalten, damit sich das Tor noch öffnet. In jedem Fall ist es ratsam, für den Öffnungsvorgang des Garagentors das Fahrzeug anzuhalten.

Es ist daher eine Aufgabe der vorliegenden Erfindung, die voranstehend beschriebenen Nachteile zumindest teilweise zu beheben. Insbesondere ist es Aufgabe der vorliegenden Erfindung, den Komfort des Fahrzeuges, insbesondere bei der Einfahrt in eine Garage zu verbessern. Vorzugsweise soll die Sicherheit durch das Auslösen der erforderlichen Funktion, z. B. zum Entriegeln und/oder Öffnen eines Tors, weiterhin gewährleistet sein.

Die voranstehende Aufgabe wird gelöst durch ein Komfortsystem mit den Merkmalen des Hauptanspruchs, ein Fahrzeug mit den Merkmalen des nebengeordneten Vorrichtungsanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Komfortsystem beschrieben sind, selbstverständlich auch im Zusammenhang mit dem erfindungsgemäßen Fahrzeug sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Komfortsystem für ein Fahrzeug mit zumindest einer UWB-Moduleinheit (kurz auch nur Moduleinheit genannt) zum Bereitstellen von zumindest einer Fahrzeugfunktion F bei einem Fahrzeug. Anstelle einer Fahrzeugfunktion F können auch mehrere Fahrzeugfunktionen F ausgelöst werden. Die UWB-Moduleinheit stellt dabei vorzugsweise eine kombinierte, einzeln handhabbare und/oder zusammenhängende UWB-Moduleinheit, insbesondere in Form einer Multifunktionseinheit, bevorzugt in Form einer Hardwareeinheit, dar. Die UWB-Moduleinheit weist dabei auf:
- eine UWB-Antenne zum Durchführen einer Kommunikation (d. h. eines Datenaustausches zwischen zwei Geräten) und/oder Detektion (d. h. einer Erfassung von Objekten und/oder Personen mit nur einem Gerät), wobei in Abhängigkeit von der Kommunikation und/oder Detektion die Fahrzeugfunktion F aktivierbar ist,
- ein, insbesondere elektronischer, UWB-Sendeempfänger (auch UWB-Transceiver genannt) zum Aussenden und/oder Empfangen von elektrischen Signalen von der UWB-Antenne, die für die Kommunikation und/oder Detektion spezifisch sind,
- eine, insbesondere elektronische, Verarbeitungsvorrichtung zur Ansteuerung des UWB-Sendeempfängers, um eine Kommunikation und/oder Detektion durch die UWB-Antenne durchzuführen, und
- eine, insbesondere elektronische, Schnittstelle zum Übermitteln eines Ergebnisses der Detektion und/oder Kommunikation an ein, insbesondere fahrzeugseitiges Steuergerät, um die Fahrzeugfunktion F in Abhängigkeit von der Detektion und/oder Kommunikation auszulösen.

Der UWB-Sendeempfänger kann in Form eines UWB-Front-End-Moduls aufgebaut sein. Die Verarbeitungsvorrichtung kann eine elektronische Verarbeitungsanordnung sein, und zur Verarbeitung bspw. einen Mikrocontroller (mit Speicher) aufweisen. Die Verarbeitungsvorrichtung kann den UWB-Sendeempfänger ansteuern und die elektrischen Signale, die von dem UWB-Sendeempfänger gesendet und/oder empfangen werden, verarbeiten, um die Kommunikation und/oder die Detektion auszuwerten und ein Ergebnis bzw. eine Information anhand der Kommunikation und/oder der Detektion zur erhalten. Auch kann die Verarbeitungsvorrichtung in Abhängigkeit von der Auswertung der Kommunikation und/oder der Detektion einen (Funktions-)Code für eine entsprechende Fahrzeugfunktion F generieren, um die entsprechende Fahrzeugfunktion F zu triggern. Auch ist es denkbar, dass letztendlich die entsprechende Fahrzeugfunktion F anhand der Ereignisse von einer ("1") oder mehreren UWB-Moduleinheit, die diese Ereignisse über ihre Schnittstellen an das Steuergerät übermitteln, im Steuergerät generiert wird. Damit wir die entsprechende Fahrzeugfunktion F indirekt von der oder den UWB-Moduleinheiten ausgelöst.

Die Schnittstelle kann ebenfalls eine elektronische Schnittstelle sein, die die Moduleinheit elektrisch, steuerungstechnisch und datentechnisch mit einem Steuergerät des Fahrzeuges verbinden kann, um z. B. über die Schnittstelle die Ergebnisse der Kommunikation und/oder der Detektion an das Steuergerät zu übermitteln und/oder über die Schnittstelle eine Aktivierung von der Fahrzeugfunktion F in Abhängigkeit von der Kommunikation und/oder der Detektion zu triggern.

Die elektrischen Signale, die von dem UWB-Sendeempfänger gesendet und/oder empfangen werden, können für die Kommunikation und/oder die Detektion spezifisch sein. Darunter ist insbesondere zu verstehen, dass anhand der elektrischen Signale ein Ergebnis der Kommunikation und/oder der Detektion durch die Verarbeitungsvorrichtung ermittelt werden kann.

Ein Ergebnis einer Detektion kann wenigstens eine Information darüber umfassen, ob sich ein Benutzer bzw. eine Person und/oder ein Objekt in der Nähe der Moduleinheit befindet, sich bewegt oder sich auf eine besondere Weise bewegt.

Ein Ergebnis bzw. eine Information, die bei einer Kommunikation zwischen der Moduleinheit und einem fahrzeugseitigen Steuergerät übertragen wird, kann zumindest ein Funktionscode für eine entsprechende Fahrzeugfunktion F oder eine Abstandsinformation (zwischen der UWB-Moduleinheit und einem Objekt), die bei der Detektion von der UWB-Moduleinheit ermittelt worden ist, umfassen.

Ein Ergebnis einer Kommunikation zwischen der Moduleinheit und einem fahrzeugseitigen Steuergerät und/oder einem benutzerseitigen Mobilgerät kann nicht nur die Authentifizierungsinformation und/oder den Funktionscode umfassen, sondern auch Navigationsdaten, Nachrichtendaten, Musikdaten und dergleichen. Sicherheitshalber muss sich hierfür der Benutzer vorher identifizieren, damit keine fremden Daten zwischen der Moduleinheit und einem Mobilgerät ausgetauscht werden.

Ferner ist es möglich, dass die UWB-Antenne (einer UWB-Moduleinheit) in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist, wobei vorzugsweise der Frequenzbereich zwischen 30 MHz bis 10,6 GHz, bevorzugt zwischen 3,0 bis 10,6 GHz liegt. Damit ergeben sich die technischen Vorteile, dass eine Kommunikation und eine Detektion möglich sind.

Ein Signal für die Kommunikation kann z. B. eine definierte Folge kurzer UWB-Impulse sein. Die definierte Folge kurzer UWB-Impulse, die bspw. mit Zeitstempeln versehen werden können, kann mithilfe der Pulsphasenmodulation im Rahmen einer digitalen Funkübertragung erzeugt werden. Dabei wird ein UWB-Puls relativ zu einem konstanten Referenztakt in der zeitlichen Lage, nämlich der Phase, verschoben. Die Phasenverschiebung zwischen den UWB-Impulsen symbolisiert dabei die Information, wie z. B. eine Authentifizierungsinformation. Die Periodendauer und die Amplitude bleiben dabei gleich.

Ein UWB-Impuls kann bspw. als ein Teil einer Sinusschwingung von einer begrenzten Dauer von wenigen Nanosekunden oder sogar Pikosekunden abgebildet werden, der einer breiten Spektrallinie von mindestens 5 GHz, insbesondere von 7,5 GHz, bis über 8,8 GHz entspricht.

Aufgrund der extrem kurzen UWB-Impulse kann eine hohe Übertragungsrate von 480 bis 1320 Mbit/s bei der Kommunikation erzielt werden, bspw. mithilfe einer digitalen Funkübertragung.

Ebenfalls aufgrund der extrem kurzen UWB-Impulse kann eine hohe Auflösung von wenigen Millimetern bis sogar Mikrometern bei der Detektion erzielt werden, bspw. mithilfe einer Laufzeitmessung der UWB-Impulse, die bspw. mit Zeitstempeln versehen werden können. Die Abmessung der UWB-Antenne bestimmt die Mittenfrequenz und die Bandbreite des UWB-Impulses. Die gesamte Sendeleistung der UWB-Antenne von wenigen Milliwatt (bspw. von ca. 0,5 mW) wird auf einen so großen Frequenzbereich verteilt, dass für den Funkbetrieb schmalbandiger Übertragungsverfahren nahezu keine Störungen hervorgerufen werden.

Der Erfindungsgedanke liegt dabei darin, dass die UWB-Moduleinheit als ein einzelner Knoten oder mit anderen Worten als ein Satellit bereitgestellt wird, der als eine einzige zusammenhängende Hardwareeinheit mit allen nötigen Sensorfunktionen (Kommunikation und Detektion), Verarbeitungs- und Ansteuerungskomponenten sowie einer Schnittstelle zum fahrzeugseitigen Steuergerät bereitgestellt wird, um mithilfe nur einen Moduleinheit die Fahrzeugfunktion F (für ein entsprechendes Fahrzeugassistenzsystem) zu erzeugen und/oder bereitzustellen. Dabei kann nur eine UWB-Antenne (die wiederum mehrere UWB-Antenneneinheiten umfassen kann) alle nötigen Sensorfunktionen für die Fahrzeugfunktion F bereitstellen. Vorteilhafterweise kann dadurch eine einfach und kostengünstig aufgebaute, leicht montierbare und einfach (elektrisch und steuerungstechnisch sowie datentechnisch) anschließbare Moduleinheit bereitgestellt werden, die Fahrzeugfunktion F bei einem Fahrzeug auf eine vorteilhafte Weise zur Verfügung stellen kann. Zudem kann dadurch eine Moduleinheit bereitgestellt werden, die zuverlässig im Betrieb ist und die die Sicherheit beim Erzeugen / Bereitstellen von der Fahrzeugfunktion F und im Betrieb von Fahrzeugassistenzsystemen erheblich erhöht.

Der Erfindungsgedanke liegt zudem darin, dass die Moduleinheit die UWB-Technologie nutzt, um eine Kommunikation, d. h. Datenaustausch zwischen zwei Geräten, und/oder eine Detektion, d. h Erfassung von Objekten und/oder Personen mit nur einem Gerät, nämlich der Moduleinheit, durchzuführen. Dabei kann die UWB-Antenne für die Kommunikation und für die Detektion eine gemeinsame UWB-Antennen-Einheit oder zwei separate UWB-Antennen-Einheiten aufweisen, sodass die Kommunikation und die Detektion simultan oder sequenziell durchgeführt werden kann.

Zudem ist im Rahmen der Erfindung denkbar, dass bei der Kommunikation ein Datenaustausch zwischen der UWB-Moduleinheit und einem (externen / nicht fahrzeugseitigen) Kommunikationsgerät mit UWB-Schnittstelle erfolgt. Dieses Kommunikationsgerät kann ein mobiler ID-Geber mit UWB-Schnittstelle sein, wodurch ein automatischer Zugang zum Fahrzeug möglich ist. Auch kann das Kommunikationsgerät mit der UWB-Schnittstelle ein Mobilfunktelefon, Tablet oder ein tragbarer Computer sein, um den zuvor erwähnten ID-Geber zu ersetzen und/oder zu ergänzen. Ferner kann das externe Kommunikationsgerät mit UWB-Schnittstelle auch zu einem Tor-/ oder Türantrieb gehören, um diesen automatisch (und direkt) anzusteuern. Hierbei finden dann eine direkte Kommunikation zwischen der jeweiligen UWB-Moduleinheit und dem externen Kommunikationsgerät mit UWB-Schnittstelle statt. Sofern eine (bekannte und externe / nicht fahrzeugseitige) mobile Garagensteuerung, die ein Entriegeln und/oder Öffnen eines Garagentors per Funk ermöglicht, verwendet wird, kann diese über das Steuergerät durch die entsprechende Fahrzeugfunktion F (indirekt) angesteuert werden. Hierbei finden dann eine indirekte Kommunikation über das Steuergerät zwischen der oder den UWB-Moduleinheiten und dem externen Kommunikationsgerät, welches beispielsweise als (bekannte und externe / nicht fahrzeugseitige) mobile Garagensteuerung ausgestaltet ist, statt. Damit kann das Komfortsystem auch an jedes bestehende System angepasst werden.

Bei einer Detektion der UWB-Moduleinheit erfolgt eine messtechnische Erfassung von zumindest einem Objekt anhand von reflektierenden Signalen, wobei in der Regel diese Signale zuvor von der (selben) UWB-Moduleinheit stammen (und wieder erfasst werden) und zumindest eine Abstandmessung zum Objekt ermöglichen. Hierbei wird die Laufzeit der reflektierten Signale von der Moduleinheit, erfasst, woraus sich ein Abstand zum Objekt ermitteln lässt. Diese Information zum Abstand der entsprechenden Moduleinheit kann als ein Ereignis an das Steuergerät über die Schnittstelle übermittelt werden. Dabei kann vorteilhafterweise die Detektion einer oder mehrerer UWB-Moduleinheit (zeit-)kontinuierlich erfolgen, wobei mehr als 2, bevorzugt mehr als 5 und besonders mehr als 10 Messungen pro Sekunde erfolgen und die entsprechenden Ereignisse (insbesondere in Form von Abstandsinformationen zu Objekten) an das Steuergerät gesendet werden.

Eine Detektion, bspw. zwecks Positionsbestimmung, kann eine oder mehrere UWB-Sensoreinheiten umfassen, um die 2D- oder 3D-Auflösung bereitzustellen. So ist es auch optional denkbar, dass zumindest zwei UWB-Moduleinheit für ein Fahrzeug vorgesehen sind, wobei die jeweiligen Ergebnisse (von den gemessenen Abständen zum Objekt) der UWB-Moduleinheiten im Steuergerät verarbeitbar sind, um bei der Detektion neben einer Abstandmessung zum Objekt auch eine Ortungsmessung des Objekts, insbesondere durch Triangulation, zu bewirken. Die Berechnung zur Ortung des Objektes erfolgt z. B. mittels trigonometrischer Funktionen aus den gemessenen Abständen zum Objekt und einem bekannten Abstand zwischen den beiden relevanten Moduleinheiten, die die Abstandsmessungen vorgenommen haben. Vereinfacht könnte man auch sagen, dass von zwei Punkten, nämlichen den jeweiligen Moduleinheiten, deren Abstand bekannt ist, Messungen zu beliebig anderen Punkten im Raum bzw. des Umfeldes (vom Fahrzeug) erfolgen, um deren Ort eindeutig zu ermitteln. Geometrisch gesehen, liegen die beiden gemessenen Abstände auf Kreisbahnen um die jeweilige Moduleinheit, wobei sich die Kreisbahnen zumindest an dem entsprechenden Ort des Objekts schneiden. Diese Ermittlung und/oder Berechnung zur Ortung des Objektes findet vorteilhafterweise in dem Steuergerät statt.

Ein weiterer Vorteil kann im Rahmen der Erfindung erzielt werden, wenn zumindest 2 UWB-Moduleinheiten, bevorzugt 4 UWB-Moduleinheiten und besonders bevorzugt 5 UWB-Moduleinheiten vorhanden sind. Hierdurch kann die Genauigkeit der Messungen und der Ortung der Objekte verbessert werden. Außerdem kann somit das gesamte Umfeld vom Fahrzeug, gemeint sind 360° rund ums Fahrzeug, erfasst werden.

Nach einer weiteren Möglichkeit kann vorgesehen sein, dass im Steuergerät wenigstens eine Speichereinheit vorhanden ist, womit Daten von der Schnittstelle, insbesondere der Ergebnisse von zumindest einer UWB-Moduleinheit sowie weitere Daten vom Fahrzeug und/oder den Fahrzeug-Sensoren (wie z. B. Geschwindigkeit, etc.; siehe weiter unten), aus der gleichen Zeit, speicherbar sind, wobei insbesondere diese Daten als (zeitgleiche) Situations-Daten zusammengefasst sind und bei einem erneuten Auftreten der Situations-Daten zumindest eine definierte Fahrzeugfunktion F durch das Steuergerät auslösbar ist. Unter dem Begriff "zeitgleich" oder "aus der gleichen Zeit" wird einerseits der gleiche Zeitpunkt der Detektion verstanden und andererseits auch die gleiche Zeitspanne, in der die Detektionen in einem konkreten Zeitabschnitt stattgefunden haben. Hierdurch erfasst das Komfortsystem die konkrete Situation rund ums Fahrzeug bei einer Zufahrt auf das Tor. Dabei lernt (gemeint ist speichert) das Komfortsystem die konkrete Situation, sodass bei einem erneuten Auftreten dieser Situation das Fahrzeug dann die definierte Fahrzeugfunktion F auslösen kann. Bei der erneuten Situation findet wieder die Detektion des Umfelds vom Fahrzeug statt, wobei den entsprechenden aktuellen Ereignissen von den jeweiligen Moduleinheiten an das Steuergerät übermittelt werden und dort ggf. mit weiteren Daten vom Fahrzeug und/oder den Fahrzeugsensoren zu aktuellen Situationsdaten in dem Steuergerät zusammengefasst werden und mit den gespeicherten Situationsdaten verglichen werden. Bei einem positiven Vergleich der beiden Situationsdatensätze wird die definierte Fahrzeugfunktion F durch das Steuergerät ausgelöst. Somit kann das Komfortsystem auf gewisse Situationen trainiert werden, in der die erfassten Daten gespeichert werden und dann bei einer wiederkehrenden Situation automatisch die Fahrzeugfunktion F ausgelöst wird. Da das Steuergerät selbst über einen Speicher verfügt, kann die definierte Fahrzeugfunktion F frei vom Benutzer eingestellt werden. Das "Anlernen" bzw. "Trainieren" des Steuergeräts kann durch das externe Kommunikationsgerät mit oder ohne UWB-Schnittstelle erfolgen. Hierzu kann insbesondere ein Mobilfunktelefon als externes Kommunikationsgerät verwendet werden. Auch ist es denkbar, dass das Trainieren oder Lernen des Steuergeräts durch ein vorhandenes Informationssystem oder Bordsystem (mit einer Benutzerschnittstelle zur Eingabe von Daten) vom Fahrzeug durch den Benutzer erfolgt.

Um eine Kompatibilität zur bestehenden Kommunikationsgeräten, wie z. B. der mobilen Garagensteuerung (mit zumindest einer Taste) vorzunehmen, kann eine ansteuerbare Box im Fahrzeug vorgesehen sein, die je nach definierte Fahrzeugfunktion F vom Steuergerät eine mechanische Taste der mobilen Garagensteuerung ansteuert. Selbstverständlich können auch andere externe Kommunikationsgeräte in der ansteuerbaren Box angeordnet werden, wozu entsprechende mechanische Adapter vorgesehen sein können, um eine individuelle Anpassung (an das jeweilige externe Kommunikationsgeräte) vornehmen zu können. Auch können mehrere ansteuerbare Boxen im Fahrzeug vorhanden sein, um den Funktionsumfang des Komfortsystems sowie des entsprechenden Fahrzeuges zu vergrößern. Die zuvor erwähnten ansteuerbaren Boxen werden durch die entsprechende Fahrzeugfunktion F von dem Steuergerät angesteuert.

Bevorzugt kann es vorgesehen sein, dass die jeweiligen Ergebnisse der UWB-Moduleinheiten eine (zeitgleiche) Umfeld-Erfassung vom Fahrzeug, insbesondere ein 360° Umfeld-Erfassung, anhand der Objekte ums Fahrzeug bilden, und als Situations-Daten mit ggf. weiteren Daten vom Fahrzeug und/oder den Fahrzeug-Sensoren im Steuergerät gespeichert sind. Die zuvor erwähnten weiteren Daten D_{F} vom Fahrzeug und/oder den Daten der Fahrzeugsensoren, die im Steuergerät speicherbar sind, können folgende Informationen vom Fahrzeug umfassen: Geschwindigkeit, Position, Uhrzeit, Datum, Temperatur, Feuchtigkeit und/oder Helligkeit. Diese Daten können dann (kontinuierlich und mehrfach pro Sekunde) mit den Daten bzw. Ereignissen der Moduleinheiten der Steuereinheit eingehen und Einfluss nehmen auf die unterschiedlichen Fahrzeugfunktionen F. So ist es z. B. denkbar, dass die vorhandene Geschwindigkeit des Fahrzeuges vor der einzufahrenden Garage einen direkten Hinweis darauf gibt, ob der Benutzer vor der Garage anhalten will oder vor dem Garagentor parken möchte. Denkbar ist auch, dass bei einem definierten Abstand zwischen Fahrzeug und Garagentor die Fahrzeugfunktion F zum Ansteuern der mobilen Garagensteuerung bzw. des Garagenantriebs erfolgt, um das Tor automatisch zu öffnen. Auch lassen sich aus der Gewohnheit des Benutzers Informationen zum Zugang der Garage erkennen. So kann z. B. die Zufahrt am Mittag (um 12:00 Uhr) einen Hinweis darauf geben, dass das Fahrzeug nur vor der Garage geparkt werden soll. Ab 18 Uhr hingegen wird üblicherweise das Fahrzeug in der Garage geparkt, sodass bei der Zufahrt ein automatisches Öffnen des Garagentors gewünscht ist. So können z. B. Informationen zur Temperatur z. B., wenn sie über 30 Grad oder unter 3 Grad sind, erkennen lassen, dass das Fahrzeug ebenfalls in der Garage geparkt werden soll. Auch die Feuchtigkeit, wie z. B. bei Starkregen kann einen Hinweis darauf geben, dass das Fahrzeug in der Garage geparkt werden soll, sodass bei einer Zufahrt des Fahrzeugs zur Garage das Tor automatisch geöffnet werden soll. Ebenfalls kann die Helligkeit maßgeblich dafür sein, ob das Fahrzeug in oder vor der Garage geparkt werden soll.

Im Rahmen der vorliegenden Erfindung soll unter dem Begriff "Tor" sowie "Tür" jegliche Zugangsbeschränkung für ein Fahrzeug, wie z. B. eine Schranke, ein Gitter oder dergleichen, verstanden werden, die eine Beschränkung der Durchfahrt für das Fahrzeug darstellt.

Optional kann es vorgesehen sein, dass bei der UWB-Moduleinheit zumindest die UWB-Antenne sowie der UWB-Sendeempfänger auf einer gemeinsamen Leiterplatte angeordnet sind, wobei die UWB-Antenne durch eine Leiterbahn auf einer Leiterplatte der UWB-Einheit ausgebildet ist, wobei vorzugsweise auch die Verarbeitungsvorrichtung auf der Leiterplatte angeordnet ist und/oder die UWB-Antenne durch ein fotolithografisches Verfahren auf der Leiterplatte hergestellt ist. Hierdurch kann die UWB-Moduleinheit besonders kompakt und kostengünstig hergestellt werden. Idealerweise ist die gesamte UWB-Moduleinheit in einem gemeinsamen Gehäuse untergebracht, womit sie auch an jeder Stelle im Fahrzeug anbringbar ist.

Vorzugsweise kann vorgesehen sein, dass bei der UWB-Moduleinheit die Verarbeitungsvorrichtung und/oder der UWB-Sendeempfänger in Form eines Mikrocontrollers, insbesondere mit einer Speichereinheit ausgeführt ist. Damit lässt sich die Moduleinheit frei ansteuern, um alle Funktionen ausnutzen zu können, und auch ggf. programmieren, wodurch das Einsatzfeld der Moduleinheit vergrößert ist.

Es kann von Vorteil sein, wenn im Rahmen der Erfindung bei der UWB-Moduleinheit zwei UWB-Antennen zum Einsatz kommen, wobei eine UWB-Antenne zur Kommunikation dient und die andere UWB-Antenne zur Detektion dient. Aufgrund von unterschiedlichen UWB-Antennen können die Kommunikation und die Detektion wahlweise simultan oder sequenziell durchgeführt werden. Mithilfe von unterschiedlichen UWB-Antennen für die Kommunikation und die Detektion können die UWB-Antennen speziell für die Durchführung der Kommunikation und Detektion ausgelegt werden. Auf diese Weise können die Kommunikation und Detektion mit erhöhter Genauigkeit durchgeführt werden.

Des Weiteren ist es denkbar, dass zumindest eine NFC-Einheit oder eine BLE-Einheit vorhanden ist, um den Funktionsumfang des Komfortsystems zu erhöhen, welche vorzugsweise innerhalb eines Gehäuses einer UWB-Moduleinheit angeordnet sind, wobei insbesondere die NFC-Einheit und/oder eine BLE-Einheit ebenfalls Daten generieren. Unter "NFC" wird eine Nahfeldkommunikation (Near-Field-Communication) zum kontaktlosen Austausch von Daten per elektromagnetischer Induktion (insbesondere mit passiven HF-RFID-Tags nach ISO/IEC 14443 oder ISO/IEC 15693) verstanden. Durch die NFC-Einheit ist es möglich im Rahmen eines Stromausfalls über die vorhandene NFC-Schnittstelle Energie von einem mobilen Gerät, insbesondere Mobilfunktelefon auf eine UWB-Moduleinheit von außen zu übertragen. Somit kann die NFC-Einheit energiequellenfrei ausgestaltet sein, wobei vorzugsweise elektrische Energie vom mobilen Gerät zur NFC-Einheit übertragbar ist. Hierdurch kann ein Notfallprogramm gestartet werden, um z. B. trotzdem eine Tür oder Klappe des Fahrzeuges z. B. beim Stromausfall zu öffnen. Auch die erwähnte BLE-Einheit kann zur Erhöhung der Sicherheit dienen, in dem ein weiterer Identifizierungscode über die Bluetooth-Schnittstelle der BLE-Einheit ausgetauscht werden. Des Weiteren können auch Daten über die BLE-Schnittstelle der BLE-Einheit bei einer größeren Distanz zwischen Fahrzeug und mobilen Gerät ausgetauscht werden. Unter "BLE" (Bluetooth Low Energy) wird eine Datenübertragung bis ca. 25 m verstanden, die per Funk im 2,4-GHz-Bereich arbeitet, und wenige Energie verbraucht. Eine Integration bei bzw. in den heutigen Kommunikationsgeräten (im Fahrzeug und/oder mobilen Gerät) ist kostengünstig zu realisieren. Außerdem können über die BLE-Einheit gleichzeitig mehrere Kommunikationsgeräte miteinander verbunden werden.

Auch ist es denkbar, dass das Steuergerät über eine Daten-Schnittstelle weitere Daten vom Fahrzeug und/oder den Fahrzeug-Sensoren erhält, wobei insbesondere Daten zur
- Geschwindigkeit
- Position
- Uhrzeit
- Datum
- Temperatur
- Feuchtigkeit
- Helligkeit
mit in die Datenverarbeitung der Steuereinheit eingehen und Einfluss nehmen auf die Fahrzeugfunktion F.

Das Komfortsystem kann nicht nur eine ("1") Fahrzeugfunktion F auslösen, sondern auch gleichzeitig oder in einem definierten Ablauf hintereinander mehrere Fahrzeugfunktionen F ansteuern bzw. auslösen. Beispielsweise kann das Garagentor und gleichzeitig die Garagenbeleuchtung angesteuert werden. Auch können mehrere unterschiedliche Fahrzeugfunktion F je nach Situation ausgelöst werden, z. B. kann das Garagentor des Benutzers Zuhause bei der entsprechenden Zufahrt als eine Fahrzeugfunktion (F1) angesteuert werden und die Tiefgaragenzufahrt im Büro als eine weitere Fahrzeugfunktion (F2) angesteuert werden. Hierzu können auch konkrete Ortangaben bzw. Ortsdaten vom Fahrzeug (als zusätzliche Daten vom Fahrzeug und/oder den Fahrzeug-Sensoren) herangezogen werden, wie z. B. GPS-Daten vom GPS-Empfänger des Fahrzeuges.

Auch ist es optional denkbar, dass die UWB-Moduleinheit über die UWB-Antenne einen Identifizierungscode und/oder einen Funktionscode mit zumindest einem Kommunikationsgerät vom Fahrzeug (ID-Geber / Mobilfunktelefon) oder einem externen Kommunikationsgerät (Antrieb für Garagentor) austauscht. In diesem Fall steuert somit die UWB-Moduleinheit direkt ein mobiles Kommunikationsgerät vom Fahrzeug, z. B. in Form eines ID-Gebers oder Mobilfunktelefons für den Zugang zum Fahrzeug oder ein externes Kommunikationsgerät, z. B. ein Garagenantrieb mit UWB-Technologie an.

Es ist ferner denkbar, dass die Fahrzeugfunktion F zumindest einer der folgenden Funktionen umfasst:
- Identifikationsvorgang mit einem Kommunikationsgerät, insbesondere in Form eines mobilen ID-Geber fürs KFZ / ID-Geber für eine Toreinheit
- Ver- oder Entriegeln einer Zentralverriegelung
- Öffnen oder Schließen einer Tür oder Klappe vom Fahrzeug
- Ein- oder Ausschalten von Licht im Fahrzeug
- Ein- oder Ausschalten von einer Alarmanlage im Fahrzeug
- Ein- oder Ausschalten von einer Heizung oder Klimaanlage im Fahrzeug
- Schließen von Fenstern oder Schiebedach vom Fahrzeug
- Ein- oder Ausklappen von Spiegeln
- Ein- oder Ausklappen einer Anhängerkupplung
- Öffnen oder Schließen einer Tür oder eines Tores
- Auslösen einer Funktion beim Gebäudemanagement
Durch die zuvor genannten Aufzählungen wird deutlich, dass sich der Komfort durch das Komfortsystem umfangreich erweitern lässt.

Ebenfalls Gegenstand der Erfindung ist ein Fahrzeug mit zumindest einem Komfortsystem wie es zuvor beschrieben wurde und wie es in den Ansprüchen definiert ist.

Ferner ist es beim Fahrzeug denkbar, dass wenigstens eine UWB-Moduleinheit für eine Fahrzeugfunktion F vorgesehen ist, und/oder eine oder mehrere UWB-Moduleinheiten, insbesondere außenseitig am Fahrzeug, links- und/oder rechtsseitig im Front- und/oder Heckbereich, am Fahrzeugdach, bevorzugt in einer Finne am Fahrzeugdach, am Außenspiegel, an einer A-, B- und/oder C-Säulenverkleidung und/oder an einem Türgriff angeordnet ist/sind. Durch den Einsatz von mehreren UWB-Moduleinheiten an unterschiedlichen Stellen im Fahrzeug kann der Einsatz des Komfortsystems weiter verbessert werden und es lassen sich zahlreiche Situationen erfassen, die zur Auslösung einer Fahrzeugfunktion F genutzt werden.

Es ist auch zu erwähnen, dass das Komfortsystem im Fahrzeug, ein Park Distance Control-System vollständig, als auch mit den erforderlichen Sensoren, ersetzen kann. Somit ist das Fahrzeug Park Distance Control-System frei ausgestaltet.

Ebenfalls Gegenstand der Erfindung ist ein Verfahren zum Auslösen einer Fahrzeugfunktion F eines Fahrzeuges durch ein Komfortsystem, insbesondere nach einem der vorhergehenden Ansprüche, umfassend mindestens eine UWB-Moduleinheit. Hierbei ist vorgesehen, dass die UWB-Moduleinheit in einem ersten Modus als eine Detektionseinheit zum Durchführen einer Detektion von Objekten um das Fahrzeug betrieben wird (Schritt 501 I), und wobei die UWB-Moduleinheit in einem zweiten Modus als eine Kommunikationseinheit zum Durchführen einer Kommunikation mit einem Kommunikationsgerät mit UWB-Schnittstelle betrieben wird (Schritt 501 II). Damit bringt das erfindungsgemäße Verfahren die gleichen Vorteile mit sich, wie sie ausführlich mit Bezug auf erfindungsgemäße Komfortsystem und/oder das erfindungsgemäße Fahrzeug beschrieben worden sind.

Es kann im Rahmen der Erfindung vorgesehen sein, dass die UWB-Moduleinheit simultan im ersten Modus (als eine Detektionseinheit) und im zweiten Modus (als eine Kommunikationseinheit) betrieben wird (Schritt 501), oder dass die UWB-Moduleinheit alternierend im ersten Modus oder im zweiten Modus betrieben wird (Schritt 501 I,II). Je nach gewünschten Spezifikationen der UWB-Moduleinheit kann die eine oder die andere Art die Moduleinheit zu betreiben vorteilhaft sein. Bei einem alternierenden Betrieb der Moduleinheit kann sichergestellt werden, dass sich die Kommunikation und Detektion nicht überlagern. Bei einem synchronen Betrieb der Moduleinheit können die Kommunikation und die Detektion parallel erfolgen und die Fahrzeugfunktionen schnell bereitgestellt werden.

Es kann ferner möglich sein, dass zumindest eine UWB-Moduleinheit im ersten Modus zur Detektion von Objekten um das Fahrzeug betrieben wird, und das Ergebnis aus der Detektion von der UWB-Moduleinheit ans Steuergerät weitergeleitet werden (Schritt 502), und im Steuergerät das Ergebnis datentechnisch verarbeitet wird (Schritt 503). Hierbei können zeitgleich weitere Ergebnisse der UWB-Moduleinheiten und/oder Daten vom Fahrzeug und/oder den Fahrzeug-Sensoren im Steuergerät als Situations-Daten verarbeitet und/oder gespeichert werden (Schritt 503), wie zuvor beschrieben.

Es kann weiter möglich sein, dass jede UWB-Moduleinheit ein Ergebnis im Schritt 501 erfasst, die zusammengefasst eine Umfeld-Erfassung vom Fahrzeug, insbesondere ein 360° Umfeld-Erfassung, anhand der Objekte ums Fahrzeug zu einem Zeitpunkt bilden, und als Situations-Daten D_{S} mit ggf. weiteren Daten D_{F} vom Fahrzeug und/oder den FahrzeugSensoren im Steuergerät (im Schritt 503) gespeichert werden. Durch diesen Schritt erfolgten das Anlernen bzw. Antrainieren des Steuergeräts an eine bestimmte Situation, um anschließend bei einer Wiederkehr dieser Situationen die definierte Fahrzeugfunktion F auslösen zu können.

Vorteilhaft ist es zudem, wenn die gespeicherten Situations-Daten D_{S} mit aktuellen Situations-Daten D_{S+} in der Speichereinheit verglichen werden und bei der Feststellung einer Identität zumindest eine definierte Fahrzeugfunktion F durch das Steuergerät ausgelöst wird. Unter dem Begriff "Identität" wird der Vergleich der gespeicherten Situations-Daten Ds mit den aktuellen Situations-Daten D_{S+} verstanden, wobei hierbei ein Auswertealgorithmus oder ein Auswertemodell zur Verwendung kommen kann. Damit ist gemeint, dass nicht die jeweiligen Situationsdaten D_{S} und D_{S+} eins zu eins verglichen werden, sondern anhand von Vergleichsalgorithmen und/oder Vergleichsmodellen, wie z. B. der künstlichen Intelligenz, neuronalen Netzen oder Fuzzylogic und dergleichen.

Es kann ferner möglich sein, dass die gespeicherten Situations-Daten D_{S} aus einer konkreten Zeit einer Zufahrt des Fahrzeuges zu einem Tor entsprechen, und bei einer identischen Zufahrt des Fahrzeuges die aktuellen Situations-Daten D_{S+} entstehen und bei einem erfolgreichen Vergleich im Schritt durch das Steuergerät eine Fahrzeugfunktion F ausgelöst wird, wobei die Fahrzeugfunktion F aus einem eingeleiteten Identifizierungsvorgang mit einem Kommunikationsgerät, insbesondere mit UWB-Schnittstelle, besteht, wodurch vorzugsweise bei einem erfolgreichen Identifizierungsvorgang das Tor durch das Kommunikationsgerät automatisch geöffnet wird. Auch können die weiteren explizit aufgeführten Fahrzeugfunktionen F (s. Anspruch 10) bei den vorliegenden Verfahren ausgelöst und ausgeführt werden.

Vorteilhafterweise kann bei einer Moduleinheit vorgesehen sein, dass nicht nur die Ergebnisse der Kommunikation und/oder der Detektion an ein benutzerseitiges Mobilgerät, insbesondere Mobiltelefon, übertragen werden, sondern auch ein Befehlscode.

Der Befehlscode kann dazu dienen, das Mobilgerät zu veranlassen, einen Benutzer über die Interaktion mit der Moduleinheit (d. h. über die Ergebnisse der Kommunikation und/oder der Detektion und/oder über entsprechende Fahrzeugfunktionen), die mithilfe der Moduleinheit aktiviert wurden, zu informieren.

Mit anderen Worten kann die Moduleinheit das benutzerseitige Mobilgerät, insbesondere Mobiltelefon, veranlassen, einen Benutzer über die Interaktion mit der Moduleinheit (d. h. über die Ergebnisse der Kommunikation und/oder der Detektion und/oder über entsprechende Fahrzeugfunktionen, die mithilfe der Moduleinheit aktiviert wurden, zu informieren.

Das benutzerseitige Mobilgerät kann zum Informieren des Benutzers eine haptische Rückmeldung, bspw. durch Vibration, z. B. mithilfe einer Piezoeinheit, eine akustische Rückmeldung, bspw. durch Klingeln, und/oder eine visuelle Rückmeldung, bspw. durch Anzeigen im Display, erzeugen.

Eine haptische akustische und/oder visuelle Rückmeldung durch das Mobilgerät kann für schlüssellose und/oder berührungslose Zugangssysteme zu einem Fahrzeug oder zu einem anderen Objekt, wie. z. B. Garage, von Vorteil sein, bspw.:
- zum Ver- und/ oder Entriegeln einer Zentralverriegelung, sog. Aktiv-Keyless-Entry-Systeme oder Passiv-Keyless-Entry-Systeme, und/oder
- zum Öffnen und/oder Schließen von beweglichen Klappen, sog. Bewegungsund/oder Gestikkontrolle, vorzugsweise für eine kontaktlose Betätigung von Klappen, insbesondere Heckklappen, Tankklappen, Steckerklappen, Türen, Türgriffen und/oder Spiegeln,
- zum Betätigen, bspw. zum Öffnen und/oder Schließen, eines Garagentors.

Der Benutzer kann über das Vibrieren/Klingeln des Mobilgeräts eine haptische/akustische Rückmeldung erhalten, dass seine Bewegung/Geste erkannt wurde, und/oder dass der Zugang zum Fahrzeug gewährt wurde, und/oder dass eine bewegliche Klappe, wie gewollt, geöffnet wird usw. Dies kann nicht nur zur Steigerung des Komforts, sondern auch zum Erhöhen der Sicherheit bei dem Auslösen von Fahrzeugfunktion führen, die mithilfe der Moduleinheit aktiviert werden.

Eine haptische, akustische und/oder visuelle Rückmeldung durch das Mobilgerät kann weiterhin beim Navigieren in einem Parkhaus, bspw. beim Erreichen eines Garagentors vorteilhaft sein.

Bei Fahrzeugassistenzsystemen, wie z. B. Sitzplatzbelegungserkennung, Kind-im-Kindersitz-Erkennung und/oder Hund-im-Fahrzeug-Erkennung, kann es weiterhin von Vorteil sein, wenn die Ergebnisse der Kommunikation und/oder der Detektion, die mithilfe der Moduleinheit durchgeführt wurden, und/oder über entsprechende Fahrzeugfunktionen, die mithilfe der Moduleinheit aktiviert wurden, an ein benutzerseitiges Mobilgerät übertragen werden. Auch dabei kann zusätzlich ein Befehlscode von der Moduleinheit an das Mobilgerät übertragen werden.

Das benutzerseitige Mobilgerät kann zum Informieren des Benutzers eine Meldung/Warnung/Alarmierung ausgeben. Eine Meldung/Warnung/Alarmierung kann insbesondere dann ausgegeben werden, wenn sich bspw. noch ein Kind oder ein Hund im Fahrzeug befindet. Die Meldung/Warnung/Alarmierung kann visuell, bspw. durch Anzeigen im Display, haptisch, bspw. durch Vibrieren, und/oder akustisch, bspw. durch Klingeln, des Mobilgeräts ausgegeben werden.

Weiterhin kann eine Warnung/Alarmierung in Abhängigkeit von der Entfernung zum Fahrzeug und/oder eines Zustandes des Fahrzeuges (bspw. Zentralverriegelung geschlossen) ausgegeben werden. Die Frequenz und/oder die Lautstärke der Warnung/Alarmierung können dabei stufenweise erhöht werden, wenn der Benutzer sich vom Fahrzeug weiter entfernt. Dabei kann es sich um eine Warn-Kaskade handeln.

Denkbar sind des Weiteren folgende Szenarien:
- Bei einem Motorausstellen erfolgt eine visuelle Meldung, bspw. durch Anzeige im Display des Mobilgeräts.
- Bei einem Verlassen und einer Entfernung vom Fahrzeug erfolgt eine haptische und/oder akustische Warnung/Alarmierung, bspw. durch Vibration und/oder Klingeln, des Mobilgeräts, ggf. mit abgestuften Frequenz und/oder Lautstärke der Warnung/Alarmierung, einer sog. Warn-Kaskade.

Zunächst kann bei einem Motorausstellen und/oder einer kleinen Entfernung zum Fahrzeug, bspw. von ung. 1 oder 2 Meter, dem Benutzer über das Mobilgerät mitgeteilt werden, dass sich ein Kind oder ein Hund im Fahrzeug befindet. Daraufhin kann dem Benutzer über das Mobilgerät eine Eingabemöglichkeit angeboten werden, zum Bestätigen, dass alles in Ordnung ist, bspw. wenn er nur kurz die Garage zu macht oder an den Kofferraum geht. Bei großer Entfernung, bspw. über 1 oder 2 Meter, und ohne eine Aktion des Benutzers kann eine haptische und/oder akustische Warnung/Alarmierung durch das Mobilgerät erfolgen. Zudem kann ein Alarm am Fahrzeug ausgelöst werden.

Zusätzlich kann ein einfaches Verriegeln von Türen/Klappen verhindert werden, wenn sich ein Kind/Hund im Fahrzeug befindet, nachdem aber der Benutzer das Fahrzeug verlassen hat.

Ferner kann eine doppelte Sicherheitsfunktion zum Verriegeln von Türen/Klappen vorgesehen werden. Der Nutzer muss hierzu aktiv und wiederholend, bspw. zwei Mal, das Verriegeln des Fahrzeuges auffordern, bevor die Verriegelung tatsächlich durchgeführt wird.

Weiterhin kann es vorteilhaft sein, wenn die Moduleinheit dazu ausgeführt ist, eine Gestensteuerung im Innenraum für mindestens eine der folgenden Fahrzeugfunktionen bereitzustellen, wie z. B.:
- Steuerung von Licht im Innenraum, insbesondere im Rücksitzbereich,
- Steuerung von Radio,
- Steuerung von Klimaanlage, usw.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung in Draufsicht auf ein Fahrzeug mit Komfortsystem bei der Einfahrt in eine Garage,
- Fig. 2: eine schematische Darstellung des Fahrzeuges aus Figur 1 beim Erfassen von Objekten ums Fahrzeug durch die UWB-Moduleinheiten,
- Fig. 3: eine schematische Darstellung des Komfortsystems mit zwei UWB-Moduleinheit und einem fahrzeugseitigen Steuergerät,
- Fig. 4: eine schematische Darstellung des Komfortsystems mit zwei UWB-Moduleinheit und einem fahrzeugseitigen Steuergerät, und
- Fig. 5: eine schematische Darstellung der Verfahrensschritt des erfindungsgemäßen Verfahrens.

In den nachfolgenden Figuren werden für die gleichen technischen Merkmale auch von unterschiedlichen Ausführungsbeispielen die identischen Bezugszeichen verwendet.

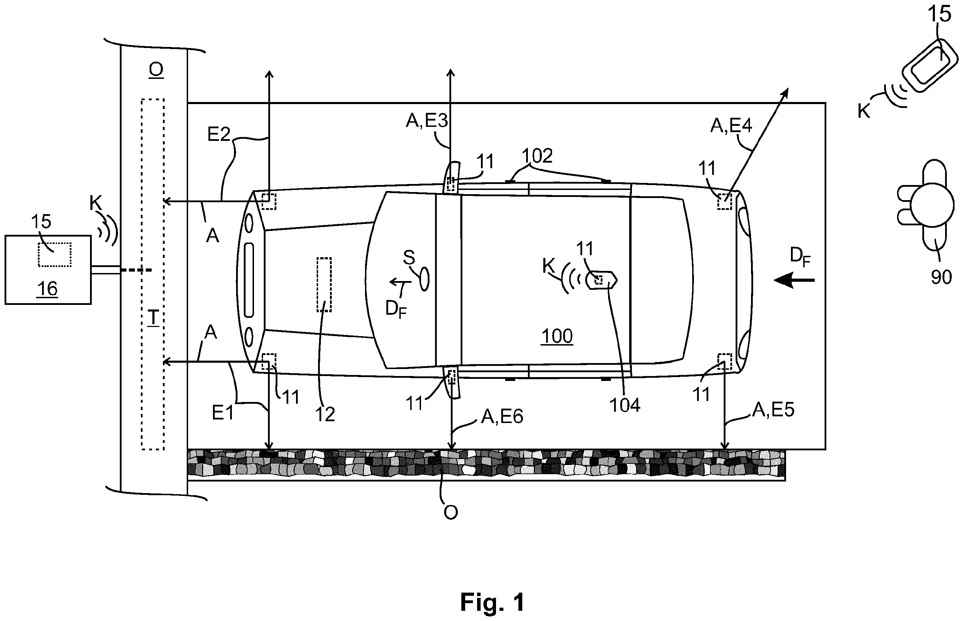

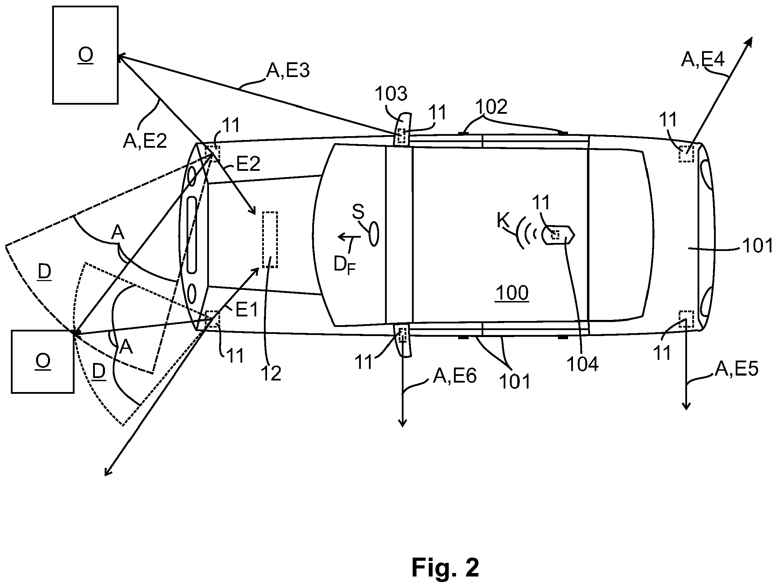

In der Figur 1 und 2 ist ein Fahrzeug 100 in Draufsicht mit einem Komfortsystem 10 mit mehreren UWB-Moduleinheiten 11 gezeigt. Dabei sind die einzelnen UWB-Moduleinheiten 11 durch ihre Schnittstellen 11.4 mit einem fahrzeugseitigen Steuergerät 12 verbunden, welches ebenfalls eine entsprechende Schnittstelle 12.1 hierzu aufweist. Dabei besteht die Kernidee des Komfortsystems darin, dass besondere Situationen des Fahrzeuges selbstständig erkannt werden und bei einer zukünftigen Wiederkehr dieser Situationen automatisch zumindest eine Fahrzeugfunktion F durch das Steuergerät 12 ausgelöst wird.

In der Figur 1 steht oder fährt das Fahrzeug 100 langsam vorwärts auf ein Objekt O, in Form einer Garage mit einem Garagentor T zu. Die vorhandene Geschwindigkeit des Fahrzeugs 100 wird durch den Pfeil mit dem Bezugszeichen D_{F} (hinter dem Fahrzeug) angedeutet. Dabei wird diese Geschwindigkeit als Fahrzeugdaten D_{F} oder als Daten von den Fahrzeugsensoren bezeichnet. Bei dem Komfortsystem 10 sind bspw. diverse UWB-Moduleinheiten 11 rund um das Fahrzeug 100 angeordnet, diese können links- und rechtsseitig im Frontbereich sowie im Heckbereich vorgesehen sein. Auch können in den links- und rechtsseitigen Spiegeln 103, sowie den Türgriffen 102 vom Fahrzeug 100 angeordnet sein. Auf dem Dach des Fahrzeuges 100 kann im Bereich des Schiebedachs oder einer Dach-Finne 104 ebenfalls eine Moduleinheit 11 des Komfortsystems 10 vorgesehen sein. Das Komfortsystem 10 kann auch dazu dienen, dass ein Benutzer 90 über ein mobiles Kommunikationsgerät 15 mit einer UWB-Schnittstelle einen Zugang zum Fahrzeug 100 erhält. Im vorliegenden Fall ist das mobile Kommunikationsgerät 15 mit UWB-Schnittstelle als ein Mobilfunktelefon ausgestaltet, was der Benutzer 90 bei sich trägt. Hierdurch lässt sich auch ein Passiv-Keyless-Entry-System generieren, bei dem ein Identifikationsvorgang durch das Komfortsystem 10 über die Fahrzeugfunktion F ausgelöst wird. zuvor kann eine Annäherung des Benutzers 90 im ersten Modus der Moduleinheiten 11 erkannt werden, wobei im zweiten Modus der Moduleinheiten 11 ein Identifizierungscode zwischen zumindest einer UWB-Moduleinheit 11 und dem mobilen Kommunikationsgerät 15 mit UWB-Schnittstelle ausgelöst wird.

Durch das Komfortsystem 10 soll erreicht werden, dass wenn der Benutzer 90 mit seinem Fahrzeug 100 auf die Garage, die als Objekt O gekennzeichnet ist, zufährt, ein automatischer Öffnungsvorgang durch die Anlage 16, bei der es sich um einen automatischen Torantrieb mit (UWB)-Funkmodul handelt, stattfindet. Zu diesem Zweck erfassen die vorhandenen Moduleinheiten 11 des Komfortsystems im ersten Modus I (der Detektion D) das Umfeld vom Fahrzeug 100 und senden die Informationen, die aus Abstandsinformationen zu den erfassten Objekten O gehören, als Ereignisse E1 und andere (E2 usw.) an die fahrzeugseitige Steuereinheit 12. Die Steuereinheit 12, die diese Ereignisse E1 u.a. zeitgleich durch ihre Schnittstelle 12.1 erhält, speichert diese in einer Speichereinheit 12.2 mit weiteren Daten D_{F} vom Fahrzeug und/oder Daten D_{F} der Fahrzeugsensoren, um diese dann weiterverarbeiten zu können. Anhand der Abstandsinformationen A von den einzelnen Moduleinheiten 11 ist das Steuergerät 12 in der Lage, eine genaue Ortung der Objekte O rund ums Fahrzeug 100 vorzunehmen. Somit kann quasi eine Karte zum 360°-Umfeld des Fahrzeugs 100 erstellt werden.

Ferner ist das Steuergerät 12 in der Lage, die aktuellen Situationsdaten Dₛ₊ mit den gespeicherten Situationsdaten Ds aus der Speichereinheit 12.2 zu vergleichen und bei einem positiven Vergleich die gewünschte Fahrzeugfunktion F, nämlich eine Authentifizierung (Vergleich des ID-Codes) bei der Garagenanlage 16 über das stationäre Kommunikationsgerät 15 mit UWB-Schnittstelle vorzunehmen. Hierzu kann eine oder mehrere UWB-Moduleinheiten 11 im Modus II eine Kommunikation K mit dem stationären Kommunikationsgerät 15 mit UWB-Schnittstelle in der Anlage 16 von der Garage aufnehmen. Sofern hierbei die Identifizierung positiv verläuft, wird dann das Garagentor T von der Anlage 16 automatisch geöffnet. In der Figur 1 ist noch parallel zur Fahrerseite des Fahrzeugs 100 eine Mauer als Objekt O dargestellt. Auch kann diese Mauer messtechnisch durch die UWB-Moduleinheiten 11 als Ereignisse E1 u.a. und somit als Situationsdaten Ds erkannt werden und beim Vergleich mit den aktuellen Situationsdaten D_{S+} zur Auslösung der Fahrzeugfunktion F herangezogen werden.

In der Figur 2 ist das Fahrzeug 100 aus der Figur 1 ebenfalls in Draufsicht dargestellt. Ferner wird die Ortungsfunktion zweier Objekte O durch die beiden frontseitigen UWB-Moduleinheiten 11 schematisch dargestellt. Wie gut zuerkennen ist, detektieren die beiden frontseitigen UWB-Moduleinheiten 11 die beiden Objekte O und erfassen messtechnisch den jeweiligen Abstand A zwischen der jeweiligen Moduleinheit 11 und dem Objekt O. Beim linksseitigen Objekt O ist der Abstand A von beiden frontseitigen UWB-Moduleinheiten 11 eingezeichnet und auch als Kreissegment jeweils skizziert. Wie gut zu erkennen ist, bilden diese bspw. an der Kante des Objektes O ein gemeinsamer Schnittpunkt. Da die beiden frontseitigen UWB-Moduleinheiten 11 den jeweiligen Abstand A als Ereignis E1 (von der linksseitigen vorderen UWB-Moduleinheit 11) und das Ereignis E2 (von der rechtsseitigen UWB-Moduleinheit) an das Steuergerät 12 übermitteln, kann das Steuergerät 12 eine Ortung des Objekts O vornehmen. Anhand der Vielzahl der erfassten Ereignisse E1 o.a. von den jeweiligen UWB-Moduleinheiten 11 kann somit das Steuergerät 12 eine 360°-Umfelderfassung vornehmen. Diese kann zusätzlich mit den Fahrzeugdaten D_{F} und/oder den Daten D_{F} vom Fahrzeugsensor als Situationsdaten aus einer gleichen Zeit zusammengefasst werden.

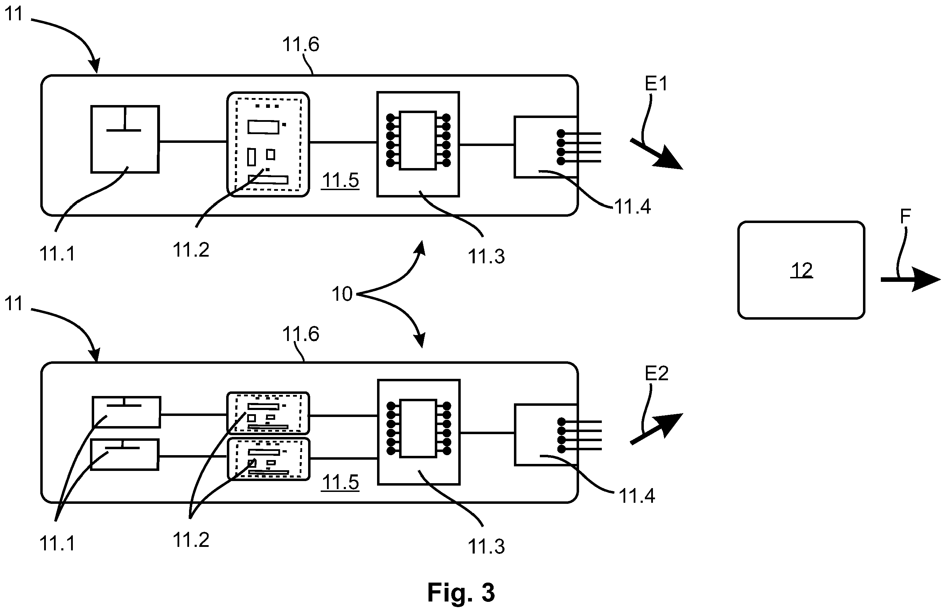

In der Figur 3 ist das Komfortsystem 10 mit zwei UWB-Moduleinheiten 11 dargestellt. Dabei ist die obere Moduleinheit 11 etwas anders als die untere UWB-Moduleinheit 11 aufgebaut. Beide UWB-Moduleinheiten 11 dienen zur Detektion D und Kommunikation K und senden die entsprechenden Informationen als Ereignisse E1 und E2 an das fahrzeugseitige Steuergerät 12, welches anhand dieser Daten eine Fahrzeugfunktion F auslösen kann. Grundsätzlich weist eine Moduleinheit 11 zumindest eine UWB-Antenne 11.1 auf, die zum Senden und/oder Empfangen von Signalen und/oder Daten geeignet ist. Dabei wird die entsprechende UWB-Antenne 11.1 durch einen UWB-Sendeempfänger 11.2 angesteuert. Die von der Verarbeitungsvorrichtung 11.3 erhaltenen Signalen und/oder Daten werden in einer Verarbeitungsvorrichtung 11.3 aufgearbeitet und an eine Schnittstelle 11.4 der UWB-Moduleinheit 11 weitergeleitet um sie an das Steuergerät 12 zu übertragen. Zweckmäßigerweise ist die UWB-Antenne 11.1, der UWB-Sendeempfänger 11.2 sowie die Verarbeitungsvorrichtung 11.3 mit der Schnittstelle 11.4 auf einer Leiterplatte 11.5 angeordnet. Diese Elemente sind in einem gemeinsamen Gehäuse 11.6 untergebracht.

In der unteren UWB-Moduleinheit 11 kommen anstelle einer UWB-Antenne 11.1 zwei UWB-Antennen 11.1, nämlich zum Senden und zum Empfangen oder für die Detektion D und die Kommunikation K (getrennt) zum Einsatz, die durch entsprechende UWB-Sendeempfänger 11.2 angesprochen werden. Die beiden UWB-Sendeempfänger 11.2 sind ebenfalls mit einer Verarbeitungsvorrichtung 11.3 verbunden. Die Verarbeitungsvorrichtung 11.3 kann eine Umschaltung zwischen Detektion und Kommunikation bzw. zwischen Senden und Empfangen vornehmen. Auch bei der unteren UWB-Moduleinheit 11 sind sämtliche elektrischen Bauteile auf einer Leiterplatte 11.5 angeordnet. Es sei noch erwähnt, dass die vorhandenen UWB-Antennen 11.1 als Leiterbahn auf der Leiterplatte 11.5., insbesondere durch ein fotolithografisches Verfahren, herstellbar sind.

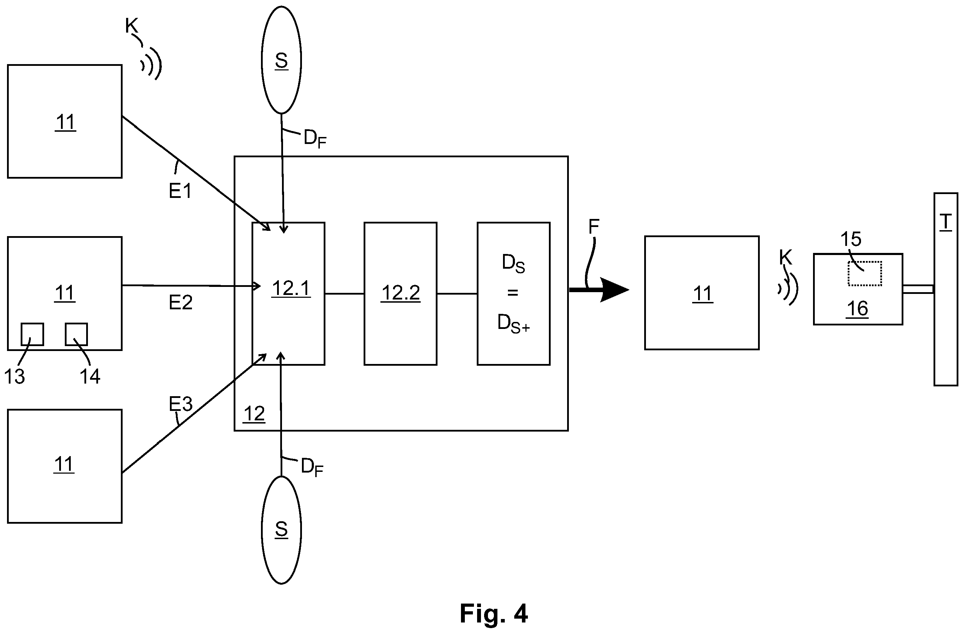

In der Figur 4 ist ein schematischer Aufbau des Komfortsystems 10 mit der Steuereinheit 12 zur Auslösung der Fahrzeugfunktion F anhand einer Garagenanlage 16 gezeigt. Dabei liefern die drei beispielhaft eingezeichneten UWB-Moduleinheiten 11 die Ereignisse E1, E2, E3 als Abstandsinformationen (Informationen zum Abstand A) an das Steuergerät 12. Hierzu dient die Schnittstelle 12.1 im Steuergerät 12 um die entsprechenden Daten aufnehmen zu können. Ferner können auch die Daten D_{F} vom Fahrzeug und/oder von den Fahrzeugsensoren über die Schnittstelle 12.1 zum Steuergerät 12 gelangen. Zweckmäßigerweise werden die Daten E1, E2, E3 sowie D_{F} von der gleichen Zeit über die Schnittstelle 12.1 an eine Speichereinheit 12.2 im Steuergerät 12 weitergeleitet. Hier können die erwähnten Daten als Situationsdaten Ds zusammengefasst und gespeichert werden und anschließend zu einem Vergleich mit aktuellen Situationsdaten D_{S+} aus einer zukünftigen Zeit, insbesondere durch einen Auswertealgorithmus oder ein Auswertemodell, verglichen werden. Der entsprechende Vergleich zur Feststellung, in wie weit die gespeicherten Situationsdaten D_{S} mit den aktuellen Situationsdaten Dₛ₊ übereinstimmen, ist ein entsprechendes "="-Symbol im Steuergerät 12 dargestellt. Über eine Identität bzw. einem positiven Vergleich kann dann die definierte Fahrzeugfunktion F vom Steuergerät 12 ausgelöst werden. Hierbei kann direkt über die UWB-Moduleinheit 11 eine Kommunikation K mit der Anlage 16 durch das Kommunikationsgerät 15 mit UWB-Schnittstelle erfolgen, um das Garagentor T automatisch zu öffnen. Auch kann eine indirekte Kommunikation über eine bestehende Garagensteuerung, die in einer ansteuerbaren Box untergebracht ist, erfolgen, wobei die Box durch das Steuergerät 12 ansteuerbar ist, um mechanisch die Öffnungsfunktion bei der bestehenden Garagensteuerung einzuleiten.

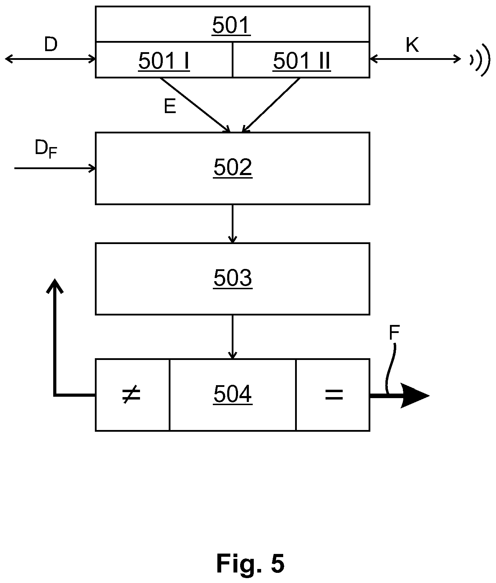

In der Figur 5 ist das erfindungsgemäße Verfahren mit den Schritten 501, 502, 503 und 504 schematisch dargestellt. Im Schritt 501 werden die UWB-Moduleinheiten11 zur Detektion D und Kommunikation K betrieben. Die Detektion D ist als Schritt 501.I dargestellt. Die Kommunikation K hingegen als Schritt 501.II. Sofern beide Modis I und II simultan stattfinden, wird nur das Bezugszeichen 501 verwendet. Das Ergebnis E1 aus der Detektion von den UWB-Moduleinheiten werden im Schritt 502 weitergeleitet und die Verarbeitung der Ergebnisse findet im Schritt 503 statt. Gleichzeitig gelangen auch noch die Daten vom Fahrzeug D_{F} sowie die Daten D_{F} der Fahrzeugsensoren im Schritt 502 in das Steuergerät 12. Im Schritt 503 werden die Daten der UWB-Moduleinheiten zeitgleich mit den weiteren Daten D_{F} vom Fahrzeug als Situationsdaten D_{S} im Steuergerät 12 gespeichert. Im weiteren Schritt 504 findet dann ein Vergleich der gespeicherten Situationsdaten D_{S} mit den aktuellen Situationsdaten Dₛ₊ statt und je nach Auswertung wird die Fahrzeugfunktion F eingeleitet oder es werden neue aktuelle Situationsdaten Dₛ₊ von dem Steuergerät ermittelt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Komfortsystem
- 11: UWB-Moduleinheit
- 11.1: UWB-Antenne
- 11.2: UWB-Sendeempfänger
- 11.3: Verarbeitungsvorrichtung
- 11.4: Schnittstelle
- 11.5: Leiterplatte
- 11.6: Gehäuse
- 12: Steuergerät (fahrzeugseitig)
- 12.1: Schnittstelle
- 12.2: Speichereinheit
- 13: NFC-Einheit
- 14: BLE-Einheit
- 15: Kommunikationsgerät mit UWB-Schnittstelle
- 16: Anlage (für T, insbesondere mit Antrieb)

- 90: Benutzer

- 100: Fahrzeug
- 101: Tür, Heckklappe
- 102: Türgriff
- 103: Spiegel
- 104: Dach-Finne, insbesondere mit GPS-Antenne und 11

- A: Abstand, insbesondere zwischen 11 und O
- D: Detektion von 11
- DF: Daten vom Fahrzeug und/oder den Sensoren
- DS: Situations-Daten aus einer Zeit
- Ex: Ereignis von UWB-Moduleinheit 11-x
- F: Fahrzeugfunktion
- K: Kommunikation von 11
- O: Objekt
- DS+: aktuelle Situations-Daten
- T: Tor, Schranke oder dergleichen

## Patentansprüche

1. Komfortsystem (10) für ein Fahrzeug (100) mit zumindest einer UWB-Moduleinheit (11) zum Bereitstellen von zumindest einer Fahrzeugfunktion (F) bei einem Fahrzeug (100), aufweisend:
eine UWB-Antenne (11.1) zum Durchführen einer Kommunikation (K) und/oder Detektion (D),
wobei in Abhängigkeit von der Kommunikation (K) und/oder Detektion (D) die Fahrzeugfunktion (F) aktivierbar ist,
ein, insbesondere elektronischer, UWB-Sendeempfänger (11.2) zum Aussenden und/oder Empfangen von elektrischen Signalen von der UWB-Antenne (11.1), die für die Kommunikation (K) und/oder Detektion (D) spezifisch sind,
eine, insbesondere elektronische, Verarbeitungsvorrichtung (11.3) zur Ansteuerung des UWB-Sendeempfängers (11.2), um eine Kommunikation (K) und/oder Detektion (D) durch die UWB-Antenne (11.1) durchzuführen,
und eine, insbesondere elektronische, Schnittstelle (11.4) zum Übermitteln eines Ergebnisses der Detektion (D) und/oder Kommunikation (K) an ein, insbesondere fahrzeugseitiges Steuergerät (12), um die Fahrzeugfunktion (F) in Abhängigkeit von der Detektion (D) und/oder Kommunikation (K) auszulösen.

2. Komfortsystem (10) nach Anspruch 1,
**dadurch gekennzeichnet,**
**dass** die UWB-Antenne (11.1) in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist, wobei vorzugsweise der Frequenzbereich zwischen 30 MHz bis 10,6 GHz, bevorzugt zwischen 3,0 bis 10,6 GHz liegt,
und/oder dass bei der Kommunikation (K) ein Datenaustausch zwischen der UWB-Moduleinheit (11) und einem Kommunikationsgerät mit UWB-Schnittstelle (15) erfolgt, und
bei einer Detektion (D) eine messtechnische Erfassung von zumindest einem Objekt (O) anhand von reflektierenden Signalen erfolgt, wobei diese Signale zuvor von der UWB-Antenne (11.1) stammen und zumindest eine Abstandmessung zum Objekt (O) ermöglichen.

3. Komfortsystem (10) nach einem der vorhergehenden Ansprüche,
**dadurch gekennzeichnet,**
**dass** zumindest zwei UWB-Moduleinheit (11) für ein Fahrzeug (100) vorgesehen sind, wobei die jeweiligen Ergebnisse der UWB-Moduleinheiten (11) im Steuergerät (12) verarbeitbar sind, um bei der Detektion (D) neben einer Abstandmessung zum Objekt (O) auch eine Ortungsmessung des Objekts (O) zu bewirken,
und/oder dass zumindest 2 UWB-Moduleinheiten (11), bevorzugt 4 UWB-Moduleinheiten (11) und besonders bevorzugt 5 UWB-Moduleinheiten (11) vorhanden sind.

4. Komfortsystem (10) nach einem der vorhergehenden Ansprüche,
**dadurch gekennzeichnet,**
**dass** im Steuergerät (12) wenigstens eine Speichereinheit (12.2) vorhanden ist, womit Daten von der Schnittstelle (11.4), insbesondere der Ergebnisse von zumindest einer UWB-Moduleinheit (11), sowie weitere Daten (D_{F}) vom Fahrzeug (100) und/oder den Fahrzeug-Sensoren (zeitgleich) speicherbar sind,
wobei insbesondere diese Daten als Situations-Daten (Ds) zusammengefasst sind und bei einem erneuten Auftreten der Situations-Daten (Ds+) zumindest eine definierte Fahrzeugfunktion (F) durch das Steuergerät (12) auslösbar ist.

5. Komfortsystem (10) nach einem der vorhergehenden Ansprüche,
**dadurch gekennzeichnet,**
**dass** die jeweiligen Ergebnisse der UWB-Moduleinheiten (11) eine Umfeld-Erfassung vom Fahrzeug (100), insbesondere ein 360° Umfeld-Erfassung, anhand der Objekte (O) ums Fahrzeug (100) zu einer Zeit bilden, und als Situations-Daten (Ds) mit ggf. weiteren Daten (D_{F}) vom Fahrzeug (100) und/oder den Fahrzeug-Sensoren im Steuergerät (12) gespeichert sind,
und/oder dass bei der UWB-Moduleinheit (11) zumindest die UWB-Antenne (11.1) sowie der UWB-Sendeempfänger (11.2) auf einer gemeinsamen Leiterplatte (11.5) angeordnet sind, wobei die UWB-Antenne (11.1) durch eine Leiterbahn auf einer Leiterplatte (11.5) der UWB-Einheit ausgebildet ist,
wobei vorzugsweise auch die Verarbeitungsvorrichtung (11.3) auf der Leiterplatte (11.5) angeordnet ist und/oder die UWB-Antenne (11.1) durch ein fotolithografisches Verfahren auf der Leiterplatte (11.5) hergestellt ist.

6. Komfortsystem (10) nach einem der vorhergehenden Ansprüche,
**dadurch gekennzeichnet,**
**dass** bei der UWB-Moduleinheit (11) die Verarbeitungsvorrichtung (11.3) und/oder der UWB-Sendeempfänger (11.2) in Form eines Mikrocontrollers, insbesondere mit einer Speichereinheit (12.2) ausgeführt ist,
und/oder dass bei der UWB-Moduleinheit (11) zwei UWB-Antenne (11.1) zum Einsatz kommen, wobei eine UWB-Antenne (11.1) zur Kommunikation (K) dient und die andere UWB-Antenne (11.1) zur Detektion (D) dient.

7. Komfortsystem (10) nach einem der vorhergehenden Ansprüche,
**dadurch gekennzeichnet,**
**dass** zumindest eine NFC-Einheit (13) oder eine BLE-Einheit (14) vorhanden ist, um den Funktionsumfang des Komfortsystems (10) zu erhöhen,
welche vorzugsweise innerhalb eines Gehäuses (11.6) einer UWB-Moduleinheit (11) angeordnet sind,
wobei insbesondere die NFC-Einheit (13) und/oder eine BLE-Einheit (14) ebenfalls Daten generieren.

8. Komfortsystem (10) nach einem der vorhergehenden Ansprüche,
**dadurch gekennzeichnet,**
**dass** das Steuergerät (12) über eine Daten-Schnittstelle (11.4) weitere Daten vom Fahrzeug (100) und/oder den Fahrzeug-Sensoren erhält, wobei insbesondere Daten zur
• Geschwindigkeit
• Position
• Uhrzeit
• Datum
• Temperatur
• Feuchtigkeit
• Helligkeit
mit in die Datenverarbeitung der Steuereinheit eingehen und Einfluss nehmen auf die Fahrzeugfunktion (F).

9. Komfortsystem (10) nach einem der vorhergehenden Ansprüche,
**dadurch gekennzeichnet,**
**dass** die UWB-Moduleinheit (11) über die UWB-Antenne (11.1) einen Identifizierungscode und/oder einen Funktionscode mit zumindest einem Kommunikationsgerät vom Fahrzeug (100) oder einem externen Kommunikationsgerät austauscht.

10. Komfortsystem (10) nach einem der vorhergehenden Ansprüche,
**dadurch gekennzeichnet,**
**dass** die Fahrzeugfunktionen (F) zumindest einer der folgenden Funktionen umfasst:
- Identifikationsvorgang mit einem Kommunikationsgerät [ID-Geber KFZ / Toreinheit]
- Ver- oder Entriegeln einer Zentralverriegelung
- Öffnen oder Schließen einer Tür (101) oder Klappe vom Fahrzeug (100)
- Ein- oder Ausschalten von Licht im Fahrzeug (100)
- Ein- oder Ausschalten von einer Alarmanlage im Fahrzeug (100)
- Ein- oder Ausschalten von einer Heizung oder Klimaanlage im Fahrzeug (100)
- Schließen von Fenstern oder Schiebedach vom Fahrzeug (100)
- Ein- oder Ausklappen von Spiegeln (103)
- Ein- oder Ausklappen einer Anhängerkupplung
- Öffnen oder Schließen einer Tür (101) oder eines Tores
- Auslösen einer Funktion beim Gebäudemanagement.

11. Fahrzeug (100) mit zumindest einem Komfortsystem (10) nach einem der vorhergehenden Ansprüche, wobei insbesondere
dass wenigstens eine UWB-Moduleinheit (11) für eine Fahrzeugfunktion (F) vorgesehen ist, und/oder
eine oder mehrere UWB-Moduleinheiten (11), insbesondere außenseitig am Fahrzeug (100), links- und/oder rechtsseitig im Front- und/oder Heckbereich, am Fahrzeugdach, bevorzugt in einer Finne am Fahrzeugdach, am Außenspiegel, an einer A-, B- und/oder C-Säulenverkleidung und/oder an einem Türgriff (102) angeordnet ist/sind.

12. Verfahren zum Auslösen einer Fahrzeugfunktion (F) eines Fahrzeuges (100) durch ein Komfortsystem (10), insbesondere nach einem der vorhergehenden Ansprüche, umfassend mindestens eine UWB-Moduleinheit (11),
wobei die UWB-Moduleinheit (11) in einem ersten Modus (I) als eine Detektionseinheit zum Durchführen einer Detektion (D) von Objekten um das Fahrzeug (100) betrieben wird (Schritt 501 I),
und wobei die UWB-Moduleinheit (11) in einem zweiten Modus (II) als eine Kommunikationseinheit zum Durchführen einer Kommunikation (K) mit einem Kommunikationsgerät mit UWB-Schnittstelle (15) betrieben wird (Schritt 501 II).

13. Verfahren nach dem vorhergehenden Anspruch,
**dadurch gekennzeichnet,**
**dass** die UWB-Moduleinheit (11) simultan im ersten Modus (I) und im zweiten Modus (II) betrieben wird (Schritt 501),
oder dass die UWB-Moduleinheit (11) alternierend im ersten Modus (I) oder im zweiten Modus (II) betrieben wird (Schritt 501 I, II),
und/oder dass zumindest eine UWB-Moduleinheit (11) im ersten Modus (I) zur Detektion (D) von Objekten (O) um das Fahrzeug (100) betrieben wird, und
das Ergebnis (E1) aus der Detektion (D) von der UWB-Moduleinheit (11) ans Steuergerät (12) (über die Schnittstelle 12.1) weitergeleitet werden (Schritt 502), und
im Steuergerät (12) das Ergebnis (E1) datentechnisch verarbeitet wird (Schritt 503), wobei insbesondere weitere Ergebnisse (E2 u.a.) der UWB-Moduleinheiten (11) und/oder Daten (D_{F}) vom Fahrzeug (100) und/oder den Fahrzeug-Sensoren derselben Zeit im Steuergerät (12) als Situations-Daten (Ds) verarbeitet und/oder gespeichert werden (Schritt 503).

14. Verfahren nach dem vorhergehenden Anspruch,
**dadurch gekennzeichnet,**
**dass** zeitgleich jede UWB-Moduleinheit (11) ein Ergebnis (E1 u.a.) im Schritt (501 I) erfasst, die zusammengefasst eine Umfeld-Erfassung vom Fahrzeug (100), insbesondere ein 360° Umfeld-Erfassung, anhand der Objekte (O) ums Fahrzeug (100) bilden, und
zeitgleich als Situations-Daten (Ds) mit ggf. weiteren Daten (D_{F}) vom Fahrzeug (100) und/oder den Fahrzeug-Sensoren im Steuergerät (12) (im Schritt 503) gespeichert werden.

15. Verfahren nach einem der vorhergehenden Ansprüche,
**dadurch gekennzeichnet,**
**dass** die gespeicherten Situations-Daten (Ds) mit aktuellen Situations-Daten (Ds+) in der Speichereinheit (12.2) verglichen werden (Schritt 504) und
bei der Feststellung einer Identität zumindest eine definierte Fahrzeugfunktion (F) durch das Steuergerät (12) ausgelöst wird,
und/oder dass die gespeicherten Situations-Daten (Ds) aus einer Zeit einer Zufahrt des Fahrzeuges (100) zu einem Tor (T) entsprechen, und
bei einer identischen Zufahrt des Fahrzeuges (100) die aktuellen (aus einer neuen Zeit) Situations-Daten (D_{S+}) entstehen und bei einem erfolgreichen Vergleich im Schritt (504) durch das Steuergerät (12) eine Fahrzeugfunktion (F) ausgelöst wird,
wobei die Fahrzeugfunktion (F) aus einem eingeleiteten Identifizierungsvorgang mit einem Kommunikationsgerät (15), insbesondere mit UWB-Schnittstelle (11.4), besteht, wodurch vorzugsweise bei einem erfolgreichen Identifizierungsvorgang das Tor (T) durch das Kommunikationsgerät (15) automatisch geöffnet wird.
